# EUROPÄISCHE PATENTSCHRIFT

(11) **EP 1 659 866 B1**
(45) Veröffentlichungstag und Bekanntmachung des Hinweises auf die Patenterteilung: **18.04.2007**
(21) Anmeldenummer: 04764139.4
(22) Anmeldetag: 14.08.2004
(51) Int. Cl.: A22B 5/20, B26D 7/26, B26D 1/15, B26D 1/14, B23D 45/00

(54) **FLEISCHSCHNEIDE- UND ZERLEGEVORRICHTUNG**
DEVICE FOR CUTTING AND STRIPPING MEAT
DISPOSITIF DE TRANCHAGE ET DE DECOUPAGE DE VIANDE

(30) Priorität: 21.08.2003 DE 10338336; 13.05.2004 DE 102004024077
(43) Veröffentlichungstag der Anmeldung: 31.05.2006
(73) Patentinhaber: FREUND Maschinenfabrik GmbH & Co. KG, 33100 Paderborn (DE)
(72) Erfinder: FREUND, Robert, 33178 Borchen (DE); FREUND, Reinhard, 33100 Paderborn (DE)
(74) Vertreter: Hanewinkel, Lorenz
(86) Internationale Anmeldenummer: PCT/EP2004/009147
(87) Internationale Veröffentlichungsnummer: WO 2005/020692

(56) Entgegenhaltungen:
- DE-A- 19 517 636
- "Katalog 2003/2004" 31. Dezember 2003 (2003-12-31), FREUND MASCHINENFABRIK GMBH & CO.KG , PADEBORN , XP002325461 Seite 10 Seite 16
- PATENT ABSTRACTS OF JAPAN Bd. 1995, Nr. 11, 26. Dezember 1995 (1995-12-26) & JP 07 204952 A (NIPPON STEEL CORP; others: 01), 8. August 1995 (1995-08-08)
- J. LEE, R.DORF, S.NOF: "International Encyclopedia of Robotics: Vol. 3: Applications and automation-Tool changing" 1988, WILEY-INSTERSCIENCE PUBLICATIONS , NEW YORK , XP002325462 Seite 1769, Spalte 2 - Seite 1781, Spalte 1
- PATENT ABSTRACTS OF JAPAN Bd. 1997, Nr. 02, 28. Februar 1997 (1997-02-28) & JP 08 257963 A (YASKAWA ELECTRIC CORP), 8. Oktober 1996 (1996-10-08)

## Beschreibung

Die Erfindung betrifft eine Fleischschneidevorrichtung und Zerlegevorrichtung zum Zerteilen von tierischem Schneidgut, mit einem auf einem Gestell montierten Schneidetisch und einem darauf angeordneten, im wesentlichen kreisförmigen, um eine Rotationsachse in einer vertikalen Schneidebene rotierbaren und mit einem Schwenksteller tiefenverstellbaren Kreismesser, wobei ein Motor mit einem angeflanschten Getriebe mit der Rotationsachse antriebsmäßig verbunden ist und seitlich oberhalb der Rotationsachse an einem Schwenkarm angeordnet ist, der in einem Abförderbereich hinter dem Kreismesser an dem Gestell gehalten ist.

Eine derartige Fleischschneidevorrichtung ist aus dem Patent DE 195 17 636 C2 bekannt. Die.hier beschriebene Vorrichtung weist eine nur umständlich zu bedienende und damit gefahrenträchtige Höhenverstellung der Schneidscheibe auf. Auch ist der Maschinenträger relativ breit im Abförderbereich des geschnittenen Fleisches angeordnet und behindert damit eine flüssige Arbeitsweise. Aus diesem Patent sind auch ein Zuführschlitten und Schutzbleche bekannt. Bekannt ist auch ein Anschlag für die das Schneidgut.

Weiterhin ist eine derartige Fleischschneidevorrichtung und Zerlegevorrichtung auch aus der DE 295 21981 U1 bekannt. Diese Vorrichtung war für das Zerlegen größerer Tiere, wie Schafe, Jungschweine, nur beschränkt geeignet, da die Halterung des Kreismessers sich im Abförderbereich des Schneidgutes über 20-30 cm erstreckte. Zudem war zwischen dem Kreismesser und dem abförderseitig liegenden Schwenkarm ein Freiraum, in den ein ungeschützter Zugriff auf den Schneidkranz möglich war. Außerdem musste das Schneidgut auf dem Schneidtisch durch Schieben abgefördert werden, was u.U. den Einsatz einer Hilfsperson erforderte.

Die Zerlegung von an Hängeförderern od. dgl. aufgehängten Tierkörpern, insbesondere das Trennen des Brustbeines, das Abtrennen der Hörner, des Kopfes, der Beine, Pfoten und Zehen, das Öffnen des Schloßbeines, das Halbieren, Spalten genannt, und das Abseiteln von Rippen wird mit motorgetriebenen Kreissägen vorgenommen, die von Hand oder zu einem Roboterarm geführt sind. Derartige Kreissägen sind aus dem Prospekt: FREUND, Katalog 2003/2004, S. 8, 10 - 16,20,22-24, bekannt. Der Getriebemotor, an dessen Achse das Kreissägeblatt angeflanscht ist, ist mit zwei Handgriffen und ggf. einer Aufhängeöse und/oder einem Roboteranschluss versehen. Die Schnitte der Kreissäge erzeugen rauhe Schnittkanten, erhebliche Materialverluste, und das Knochensägemehl kontaminiert das Fleisch in unerwünschter Weise.

Da der hängende Tierkörper nur einen mäßigen Gegenhalt gegen Querkräfte bietet, weicht er häufig einer geraden Schnittfführung aus, wenn diese mittig durch Knochen, z. B. das Brustbein, führen soll. Die Handführung der Kreissäge in der Schnittrichtung durch den außer bei der Schlachtung gewöhnlich auf 1 - 2°C abgekühlten Tierkörper erfordert einen erheblichen Kraftaufwand.

Es ist Aufgabe der Erfindung, eine Fleischschneidevorrichtung und Zerlegevorrichtung auf einem Schneidetisch zu schaffen, die die vorstehend genannten Nachteile der bekannten Fleischschneidevorrichtungen nicht aufweist. Weiterhin soll eine vorteilhafte Schnittqualität und hohe Standzeit des Schneidwerkzeuges auch für eine Vorrichtung zum Zerlegen von hängenden Tierkörpern mit einer besseren Schnittführungstreue und einer leichtere Handhabung erreicht werden.

Zur Lösung dieser Aufgabe wird eine Vorrichtung gemäß Anspruch 1 vorgeschlagen

Vorteilhafte Ausgestaltungen sind in den Unteransprüchen angegeben.

Die Anordnung des schmalen Schwenkarmes, an dem der Motor, das Getriebe und das Kreismesser angeordnet sind, in der Vorschubrichtung sowie die Einfügung des Spaltkeiles in den Zwischenbereich zwischen dem Kreismesser und dem Schwenkarm erbringen ein stauloses Abfördern des abgeteilten Schneidgutes.

Vorteilhaft werden Rollenbahnen oder ein Förderband auf dem Schneidtisch angeordnet, die passiv oder aktiv den Abtransport des Schneidgutes erleichtern.

Auch zuführseitig ist längs oder quer eine Rollenbahn oder ein Bandförderer auf den Schneidtisch zu setzen, soweit dort nicht ein Zuführschlitten ausreichend ist.

Der Zuführschlitten kann mit einem das Kreismesser aufnehmenden Spalt, einer Vorschubkante für das abgeschnittene Teil und verschiedenen Haltemulden ausgestattet sein.

Alle Zubehörteile, die der Zu- und Abförderung dienen, wie Zuführtisch, Rollenbahnen, Förderbänder, Anschlag des Schneidgutes, sind seitlich am Gestell gehaltert und abschwenkbar, so dass eine einfache Reinigung und eine Umstellung bei wechselndem Schneidgut unmittelbar möglich ist.

Das Gestell ist mit höhenverstellbaren Füßen versehen, damit es an verschiedene Bedienergrößen und eventuell die Höhe von Zu- oder Abführbändern anpassbar ist. Das Gestell und der Kreismesserantrieb sind für einen linkshändischen und einen rechtshändischen Einbau vorbereitet, so dass die Vorrichtung zwanglos in unterschiedliche Produktionslinien einzubringen ist.

Vorteilhaft ist das Kreismesser mit einem Messerschutz mit in Sektoren gegliedertem Kunststoffbesatz weitgehend umgeben, so dass Kreismesser unterschiedlichen Durchmessers; beim Nachschleifen nimmt er ab; immer optimal vor dem Zugriff geschützt ist.

Die Verwendung von Kreismessern für das Zerteilen von Fleisch hat sich wegen des äußerst geringen Verlustes bewährt. Für das Zerlegen von Schafen, Schweinen etc. in Vorder- und Hinterhälften, wobei auch Knochen durchteilt werden müssen, hat sich ein Kreismesser ähnlich bewährt, das von dem Einspannflansch aus bis zum keilförmigen Messerschliff hin eine stetig verjüngte Dicke aufweist.

Die Schnittgeschwindigkeit des Kreismesserumfangs wird durch den Kreismesserdurchmesser und die Drehzahl so bestimmt, dass bei zügigem Arbeiten ein glatter Fleischrand erzeugt wird und eine glatte Spaltung von Knochen bei möglichst geringen Knochenanbruch erfolgt.

Der Durchmesser des Kreismessers; er liegt zweckmäßig zwischen 100 und 1.000 mm, wird für Arbeiten, die auch ins Innere des Tierkörpers führen, kleiner als bei reinen Außenarbeiten gewählt.

Der leichtere Angriff des Kreismessers auf das Material verleiht ihm eine mehrfach höhere Standzeit als es ein Kreissägeblatt unter gleichen Verhältnissen aufweist. Die höhere Standzeit vermindert die Rüst- und Wartungszeiten.

Für die unterschiedlichen Zerlegearbeiten, wie
Brustbeinteilen,
Hornabschneiden,
Beine, Pfoten, Zehen abtrennen,
Schloßbeinspalten,
Halbieren eines Tierkörpers,
Nacken und Kopf ablösen,
Rippen schneiden,
Abvierteln,
werden zweckmäßig unterschiedliche Scheibendurchmesser, Griffanordnungen und Schutzblechanordnungen ausgewählt, wie dies bei der vorbekannten Kreissägetechnik üblich war, damit eine angepasste Schnitttiefe, z. B. 85 mm zum Brustbeintrennen, und eine günstige Arm-und Handhaltung gewährleistet ist.

Der Befestigungsflansch des Kreismessers ist möglichst flach und ohne Kanten und Ecken ausgebildet, damit das geschnittene Material seitlich ungehemmt vorbei gleiten kann.

Vorteilhafte Ausgestaltungen sind in den Figuren 1-4 dargestellt.
- Fig. 1: zeigt eine Seitenansicht der Schneidvorrichtung;
- Fig. 2: zeigt eine Frontansicht der Schneidvorrichtung;
- Fig. 3: zeigt einen zuführseitigen Ausschnitt.
- Fig. 4: zeigt eine Anordnung in einer Produktionsstraße in Draufsicht.

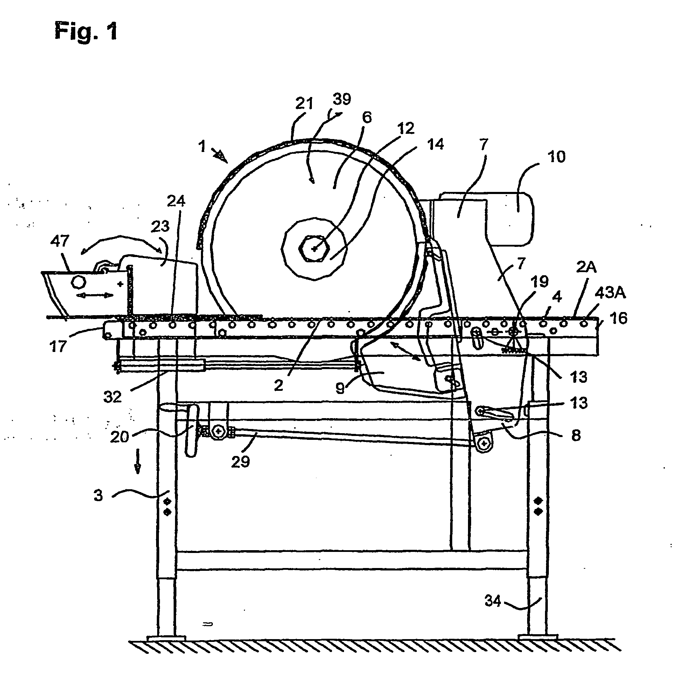

Fig. 1 zeigt ein Tischgestell 3 mit Stellschrauben 33, höhenverstellbaren Füßen 34 und einem Schneidetisch 2, in den eine Schneidvorrichtung 1 hineinragt, die aus einem Kreismesser 6 besteht, dessen Zentrum auf einer Antriebsachse 12 mit einem Flansch 14 gehalten ist, die über ein Getriebe mit einem oben liegenden Motor 10 antriebsmäßig verbunden ist. Der Motor 10, das Getriebe 11 und das Kreismesser 6 sind an einem oberen Ständerbereich 7 eines Schwenkarmes 8 abförderseitig gehalten, der flach ausgebildet ist und in der Erstreckungsrichtung des Kreismessers 6 etwa mit diesem fluchtend im Schwenklager 19 am Gestell 3 gelagert ist. Der Schwenkarm 8 erstreckt sich bis zur halben Gestellhöhe in das Gestell 3 hinein und ist dort in kreisbogenförmigen Ausschnitten von Feststellschrauben 13 durchsetzt und eingeklemmt. Das untere Schwenkarmende ist mit einem Gelenk an eine Gewindespindel angekoppelt, die frontseitig am Gestell 3 in einem Gegengewinde gelagert und frontseitig zugänglich mit einem Handrad bestückt ist. Die Feststellschrauben 13 sind bis zur Gestellseite herausgeführt, so dass sie für das Verstellen des Eintauchwinkels des Kreismessers 6 in die Tischfläche leicht gelöst und fixiert werden können.

Zwischen dem Schwenkarm 8 und dem Rand des Kreismessers 6 ist ein Spaltkeil 9 angeordnet, der auf engen Spalt zum Messer 6 einstellbar ist.

Der Schneidetisch 2 ist auf seiner Tischfläche 4 mit einer Rollenbahn 43A belegt. Auf dem Schneidetisch 2 und an einer seitlich am Gestell 3 angeordneten Schlittenführungsstange 32 ist ein Zuführschlitten 24 mit einem Schieber 23 und einer Mulde 47 für das zuzuführende Schneidegut 28 gelagert, so dass auch ein seitliches Abschwenken möglich ist.

Das Kreismesser 6 ist obenseitig und auf der Schlittenseite von einem Messerschutz 21 umgeben.

Die Transportrichtung erstreckt sich von der Bedienseite 17 über den Abförderbereich 2A zur Tischrückseite 16. Die Neigungsverstellung des Schneidwerkes ist mit dem Pfeil 39 bezeichnet.

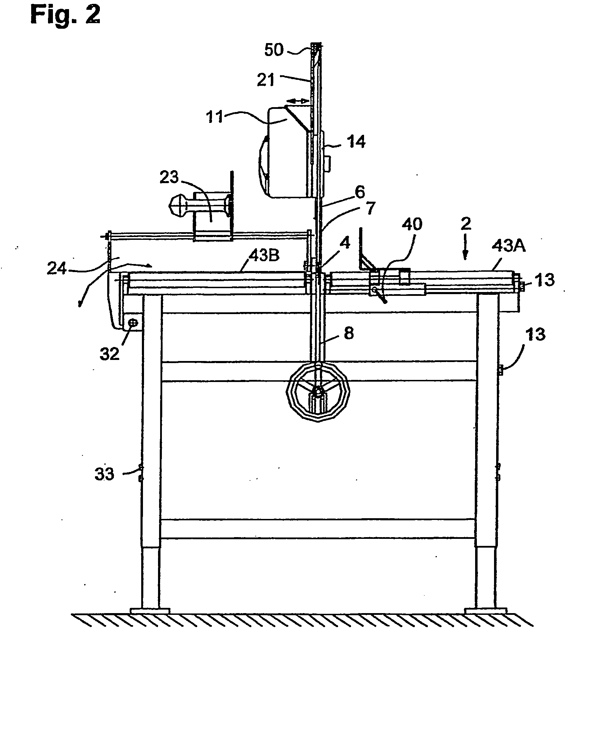

Fig. 2 zeigt eine Frontansicht der Zerlegevorrichtung. Man erkennt die mittige Teilung 18 des Schneidtisches 2 und die beidseitig auf der Tischplatte aufgesetzten Rollenbahnen 43A, 43B. Die Antriebsachse 12 des Kreismessers erstreckt sich in das Getriebe 11, das oberhalb des Schneid-Arbeitsbereichs an dem schmalen Schwenkarm 8, 7 gehalten ist. Um das Kreismesser 6 ist der Messerschutz 21 oberhalb des Getriebes 11 angeordnet, der vorne abgenommen ist, so dass man die innere randseitige Bestückung mit radial verstellbaren Kunststollsektoren 50 erkennen kann.

Links im Bild von dem Kreismesser 6 ist der Zuführschlitten 24 zu sehen, der u.a. an der Führungsstange 32 in der Schneid- und Förderrichtung geführt ist. An dem Führungsschlitten 24 befindet sich quer zur Schneidrichtung eine Führungsstange 46, auf der ein Querschieber 32 verschieblich gelagert ist, der mit einem Handgriff 25 versehen ist. Der Schieber ist nach vorne abschwenkbar und kommt insbesondere dann zum Einsatz, wenn das Schneidgut 28 Stück für Stück vorgelegt werden soll oder der Schieber 23 als Niederhalter für das Schneidgut 28, wie dargestellt, dient.

Der Zuführschlitten 24 weist ebenfalls einen Handgriff 25 auf und eine Schlitzausnehmung oder Tasche 27, in die das Kreismesser 6 einfährt, wenn der Schlitten vorgeschoben wird. Auf der zum Handgriff 25 abgelegenen Seite der Ausnehmung 27 ist eine Vorschubkante 26 angeordnet, die das abgeschnittene Gut noch ein Stück weiterbefördert.

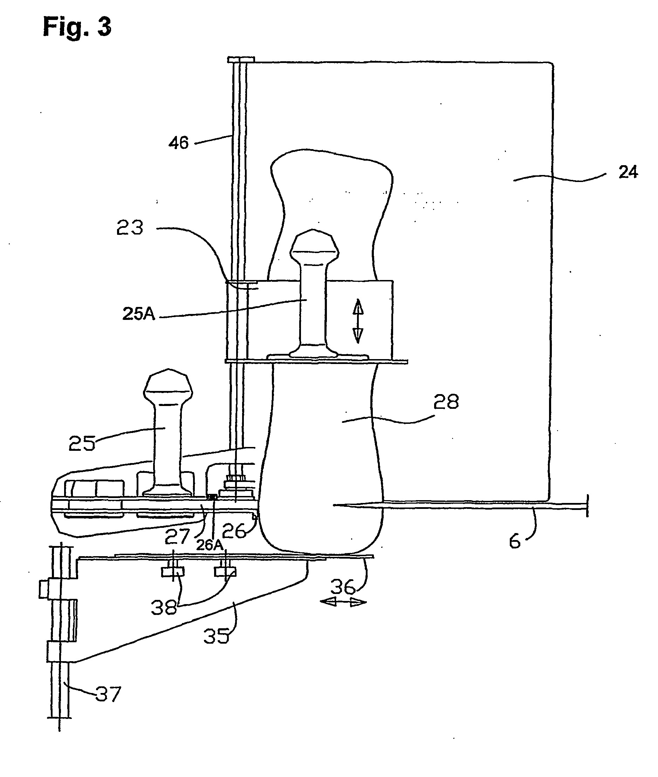

Rechts im Bild von dem Kreismesser 6 ist quer zur Förderrichtung eine Führungsstange 37 am Gestell 3 angeordnet, auf dem ein Anschlag 35 verschieblich und mit dem Knebel 40 festlegbar gelagert ist. Der Anschlag 35 trägt eine längs verschiebliche Anschlagplatte 36, die mit Klemmschrauben 38 festlegbar ist.
Einzelheiten dazu zeigt Fig. 3 in einer Draufsicht auf die verschieblichen Baugruppen 24, 23, 35.

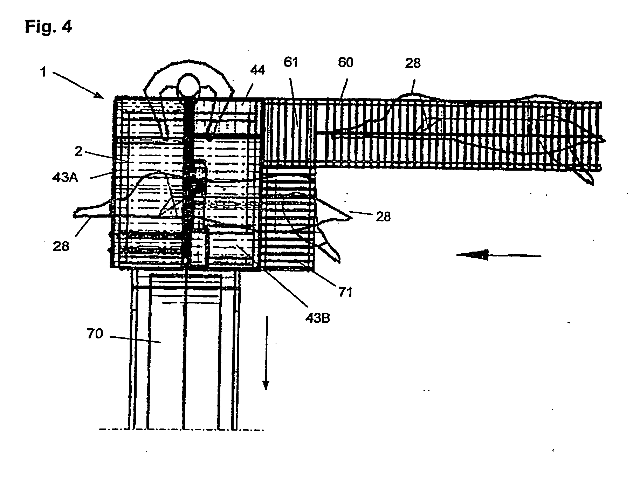

Fig. 4 zeigt eine Anordnung der Vorrichtung 1, in einer Produktionsstraße mit einem Zu- und einem Abförderer 60, 61, 70. Das Schneidgut 28 läuft vom Zuförderer 60 über einen kurzen Anpassungsförderer 61 von links des Bedieners auf einem schmalen Querförderer 44 auf den Schneidtisch 2, so dass der Bediener das Objekt bis zum Schneidspalt und darüber hinaus leicht vorschieben kann. Dann schiebt er es auf den in der Abfördervorrichtung orientierten Rollenbahnen 43A, 43B sowie die Ansatzrollenbahn 71 auf das Abförderband 70. Die Förderbahnen können mit passiven oder aktiv getriebenen Rollen oder mit Kettenantrieben bestückt sein.

### Bezugszeichenliste

- 1: Schneidevorrichtung
- 2: Schneidetisch
- 2A: Abförderbereich
- 3: Gestell
- 4: Tischfläche (Rollenbahn/Transportband)
- 6: Kreismesser
- 6A: Messerkante
- 7: Ständer
- 7A: Ständer, oberes Ende
- 8: Schwenkarm
- 9: einstellbarer Spaltkeil (Berührungsschutz)
- 10: Elektromotor
- 11: Getriebe
- 12: Antriebsachse mit Spannmutter
- 13: Klemmschrauben
- 14: Flansch
- 16: Rückseite Tisch
- 17: Bedienseite
- 18: Schlitz in 4
- 19: Schwenkachse für Schnitttiefenverstellung
- 20: Handrad für Schnittiefenverstellung
- 21: Messerschutz
- 23: Schieber/Niederhalter, wegschwenkbar
- 24: Zuführschlitten

- 25: Handgriff
- 26: Vorschubkante für Schneidgut
- 26A: Handschutzblech
- 27: Tasche / Schlitzaufnehmung
- 28: Schneidgut
- 29: Gewindespindel-Höhenverstellung
- 32: Schlittenführung
- 33: Feststellschraube
- 34: höhenverstellbare Füße
- 35: Anschlag für Schneidgut
- 36: Anschlag längs einstellbar
- 37: Führungsstange
- 38: Klemmschraube
- 39: Schnitttiefen-Einstellung
- 40: Feststellschraube
- 43A: Rollenbahn
- 43B: Rollenbahn
- 44: Querrollenbahn
- 45A: muldenartiger Bereich
- 46: Führungsstange
- 47: Mulde
- 50: Kunststoffsektorbesatz
- 60: Zuförderer
- 61: Abförderer
- 70: Abförderbahn
- 71: Ansatzrollenbahn

## Patentansprüche

1. Fleischschneidevorrichtung und Zerlegevorrichtung (1) zum Zerteilen von tierischem Schneidgut (28), mit einem auf einem Gestell (3) montierten Schneidetisch (2) und einem darauf angeordneten, im wesentlichen kreisförmigen, um eine Rotationsachse (12) in einer vertikalen Schneidebene rotierbaren und mit einem Schwenksteller (29) tiefenverstellbaren Kreismesser (6), wobei ein Motor (10) mit einem angeflanschten Getriebe (11) mit der Rotationsachse (12) antriebsmäßig verbunden ist und seitlich oberhalb der Rotationsachse (12) an einem Schwenkarm (8) angeordnet ist, der in einem Abförderbereich (2A) hinter dem Kreismesser (6) an dem Gestell gehalten ist, **dadurch gekennzeichnet,**
**dass** der Schwenkarm (8) schmal ausgebildet ist und sich zumindest annähernd fluchtend zum Kreismesser (6) erstreckt
und
mit einem Schwenkgelenk (19) an dem Schneidetisch (2) am Gestell (3) gelagert ist und unterhalb des Schneidetisches (2) jeweils schwergängig und/oder lösbar fixiert gehalten ist und
**dass** der Schwenksteller (29) des Schwenkarmes (8) ein Spindelantrieb (29) ist, der gelenkig mit dem Schwenkarm (8) verbunden ist und
der von einer Bedienseite (17) des Schneidetisches (2) aus bedienbar ist, und
**dass** in einem Bereich zwischen dem Schwenkarm (8) und dem Kreismesser (6) ein dazu auf engen Spalt einstellbarer Spaltkeil (9) somit diesen Bereich fast vollständig ausfüllend angeordnet ist.

2. Fleischschneidevorrichtung nach Anspruch 1, **dadurch gekennzeichnet, dass** der Spindelantrieb (29) mit einem Handrad (20) bedienbar ist.

3. Fleischschneidevorrichtung nach Anspruch 1, **dadurch gekennzeichnet, dass** der Schwenkarm (8) mit dem Gestell (3) durch Klemmschrauben (13) zusammengehalten ist, die jeweils konzentrisch um das Schwenklager (19) angeordnete Kreisbogenäusnehmungen durchsetzen und sich mit ihrem Kopf bis randseitig an das Gestell (3) erstrecken.

4. Fleischschneidevorrichtung nach Anspruch 1, **dadurch gekennzeichnet, dass** auf dem Schneidetisch (2) ein Zuführschlitten (24) mit einem Handgriff (25) verschieblich gelagert ist, der eine schlitzförmige Ausnehmung (27) aufweist, durch die vorgeschoben das Kreismesser (6) hindurch tritt und seitlich von der mindestens ein Handschutzblech (26A) und ggf. abseits des Handgriffs (25) eine Vorschubkante (26) für das Schneidgut (28) angeordnet sind.

5. Fleischschneidevorrichtung nach Anspruch 4, **dadurch gekennzeichnet, dass** der Schneidetisch (2) oder der Zuführschlitten (24) ein- oder beidseitig des Kreismessers (6) mit je einer Rollenbahn (43A, 43B) oder einem Förderband belegt ist.

6. Fleischschneidevorrichtung nach Anspruch 4, **dadurch gekennzeichnet, dass** der Zuführschlitten (24) an einer Führungsstange (32), die seitlich am Gestell (3) angeordnet ist, einseitig geführt ist und um die Führungsstange (32) auf dem Schneidetisch (2) und neben diesem herabhängend verschwenkbar ist.

7. Fleischschneidevorrichtung nach Anspruch 4, **dadurch gekennzeichnet, dass** der Zuführschlitten (24) ein- oder beidseitig der schlitzförmigen Ausnehmung (27) eine Schneidgut (28) aufnehmende Mulde (47) aufweist oder dass ein ausnehmungsnaher Bereich muldenartig ausgebildet ist und/oder die schlitzförmige Ausnehmung (27) des Zufuhrschlittens (24) eine schneidgut-spezifisch unterschiedliche Weite aufweist.

8. Fleischschneidevorrichtung nach Anspruch 7, **dadurch gekennzeichnet, dass** an dem Zuführschlitten (24) frontseitig eine Querstange (46) angebracht ist, an der verschieblich und verschwenkbar ein Schieber und Niederhalter (23) gelagert ist, der einen Handgriff (25A) trägt.

9. Fleischschneidevorrichtung nach Anspruch 4, **dadurch gekennzeichnet, dass** frontseitig am Gestell (2) abseitig des Zuführschlittens (24) eine Führungsstange (37) horizontal angeordnet ist, auf der ein Anschlag (35, 36) für das Schneidgut (28) verschieblich und festlegbar sowie abschwenkbar und auf den Schneidetisch (2) auflegbar gelagert ist.

10. Fleischschneidevorrichtung nach Anspruch 1, **dadurch gekennzeichnet, dass** das Kreismesser (6) einem zentralen Befestigungsflansch (14) aus einer radial abnehmenden Dicke aufweist und randseitig in eine spitze Messerkante (6A) ausläuft.

11. Fleischschneidevorrichtung nach Anspruch 1, **dadurch gekennzeichnet, dass** das Kreismesser (6) von einem teilkreisförmigen Messerschutz (21) umgeben ist, der auf seinem entlang einer Messerkante (6A) gelegenen Bereich mit einem konkav profilierten, sektormäßig gegliederten Kunststoffbesatz (50) an verschiedene Kreismesserdurchmesser eng anpassbar radial einstellbar bestückt ist.

12. Fleischschneidevorrichtung nach Anspruch 5, **dadurch gekennzeichnet, dass** mindestens eine der Rollenbahnen (43A, 43B) mit losen oder angetriebenen Rollen bestückt ist.

13. Fleischschneidevorrichtung nach Anspruch 5, **dadurch gekennzeichnet, dass** auf dem Schneidetisch (2) auf einem Bedienbereich eine Querrollenbahn (44) mit längsgerichteten Rollen angeordnet ist.

14. Fleischschneidevorrichtung nach. Anspruch 5, **dadurch gekennzeichnet, dass** die Rollenbahnen (43A, 43B, 44) abschwenkbar und lösbar an dem Gestell (3) gelagert sind.

15. Fleischschneidevorrichtung nach Anspruch 9, **dadurch gekennzeichnet, dass** der Zuführschlitten (24), der Anschlag (35, 36), der Motor (10) mit dem Getriebe (11) sowie ein Messerschutz (21) wahlweise rechtshändig und linkshändig auf dementsprechend vorbereiteten Gestell (3) anzuordnen sind.

## Claims

1. Device for cutting and stripping meat (1), said device being used to divide up an animal product (28) to be cut, comprising a cutting bench (2) that is mounted on a trestle (3) and a circular blade (6) that is mounted on said bench, turning in a vertical plane around a rotating shaft (12), its depth of cut adjustable by a pivoting adjustment (29), wherein a motor (10) with a flanged gear (11) is connected to the rotating shaft (12) to produce the drive, said motor being positioned laterally above the rotational axle (12) on a pivoting arm (8), which is fixed to the trestle in a discharge zone (2A) behind the circular blade (6), **characterized in that** the pivoting arm (8) is narrow, and extends in, at least approximate, alignment with the circular blade (6), and
is mounted on the cutting bench (2) on the trestle (3) by means of a pivot articulation (19) and is fastened by means of a restricting and/or detachable connection underneath the cutting bench (2),
and that
the pivoting actuator (29) of the pivoting arm (8) is a spindle drive (29), which is connected in an articulated manner to the pivoting arm (8), and can be manipulated from the operating side (17) of the cutting bench (2),
and that a gap wedge (9) is provided in the region between the pivoting arm (8) and the circular blade (6), said wedge being adjusted to produce a narrow gap, thus almost completely filling said region.

2. Device for cutting meat, according to claim 1, **characterized in that** the spindle drive (29) can be actuated by means of a hand wheel (20).

3. Device for cutting meat, according to claim 1, **characterized in that** the pivoting arm (8) is connected to the trestle (3) by means of attachment screws (13) passing through circarc cut-outs, arranged in a concentric manner around the pivot articulation (19), the heads of the screws extending to the edges of the trestle (3).

4. Device for cutting meat, according to claim 1, **characterized in that** on the cutting bench (2) a feeding carriage (24) with a handle (25) is maintained in a slidable manner, said carriage featuring a slit recess (27), through which passes the circular blade (6) when it is advanced, and to the side of which are arranged at least one hand guard plate (26A) and, if necessary, besides the handle (25), a feeding edge (26) for the material to be cut (28).

5. Device for cutting meat, according to claim 4, **characterized in that** the cutting bench (2) or the feeding carriage (24), on one or both sides of the circular blade (6), are each covered with a roller conveyor (43A, 43B) or with a band conveyor.

6. Device for cutting meat, according to claim 4, **characterized in that** the feeding carriage (24) is guided, on one side, by means of a guide rod (32), which is mounted laterally on the trestle (3), and that said carriage, pivoted on the guide rod, can be turned either onto the cutting bench (2) or into a hanging position at the side of the bench.

7. Device for cutting meat, according to claim 4, **characterized in that** the feeding carriage (24) has a trough (47) receiving the material to be cut (28), on one or both sides of the slit recess (27), or that an area near the recess is shaped as a through, and/or that the width of the slit recess (27) in the feeding carriage (24) is variable, depending on the material to be cut.

8. Device for cutting meat, according to claim 7, **characterized in that** a crossbar (46) is mounted on the front of the feeding carriage (24), maintaining, in a slidable and pivoted manner, a slider and holder (23) with a handle (25A).

9. Device for cutting meat, according to claim 4, **characterized in that** a horizontal guide rod (37) is mounted on the front side of the trestle (3), out of the way of the feeding carriage (24), maintaining a stop (35, 36) for the material to be cut (28) in a slidable and fixable manner, which is also pivoted and can be positioned on the cutting bench (2).

10. Device for cutting meat, according to claim 1, **characterized in that** the circular blade (6) comprises a centred mounting flange (14) with a radially decreasing thickness, tapered towards a sharp edge (6A).

11. Device for cutting meat, according to claim 1, **characterized in that** the circular blade (6) is enclosed by a sector-shaped blade protector (21), which comprises an edging, positioned in an area bordering the edge of the blade (6A), which consists of concavely profiled synthetic material structured in segments (50), and can thus be radially adjusted to closely fit different diameters of circular blades.

12. Device for cutting meat, according to claim 5, **characterized in that** at least one of the roller conveyors (43A, 43B) comprises loose or driven rollers.

13. Device for cutting meat, according to claim 5, **characterized in that** a transverse roller conveyor (44), with longitudinally oriented rollers, is positioned in an operating zone on the cutting bench (2).

14. Device for cutting meat, according to claim 5, **characterized in that** the roller conveyors (43A, 43B, 44) are mounted on the trestle (3) in a pivoted and detachable manner.

15. Device for cutting meat, according to claim 9,
**characterized in that** the feeding carriage (24), the stop (35, 36), the motor (10) with the gear (11), and the blade protector (21) can be arranged on the trestle (3), which has been adequately prepared, in a right-hand or left-hand manner.

## Revendications

1. Dispositif de tranchage et de découpage de viande (1) pour couper du matériau animal (28), avec une table de tranchage (2) qui est montée sur un chevalet (3), et avec une lame circulaire (6) de forme essentiellement circulaire qui est montée sur cette table, tournant en un plan vertical autour d'un axe de rotation (12), sa profondeur de coupe réglable par un régulateur pivotant (29) ; un moteur (10) avec un engrenage à flasque (11) étant relié à l'axe de rotation (12) pour produire l'entraînement, ledit moteur étant placé latéralement au-dessus de l'axe de rotation (12) sur un bras pivotant (8), qui est maintenu au chevalet dans une zone de décharge (2A) derrière la lame circulaire. (6),
**caractérisé en ce que** le bras pivotant (8) est étroit, et se prolonge dans la direction de la lame circulaire (6) en s'alignant approximativement avec cette dernière,
et qu'il est monté sur la table de tranchage (2) sur le chevalet (3) au moyen d'un axe pivotant (19) et est maintenu d'une façon grippé et/ou fixé de manière détachable sous la table de tranchage (2),
et que le régulateur pivotant (29) du bras pivotant (8) est une broche filetée (29), qui est reliée d'une façon articulée au bras pivotant (8), et peut être manoeuvrée du côté de service (17) de la table de tranchage (2),
et qu'un coin de fente (9) est établi dans la région entre le bras pivotant (8) et le bord de la lame circulaire (6), ce coin étant ajustable par rapport. à la lame, laissant libre un espace étroit, de ce fait remplissant ladite région presque totalement.

2. Dispositif de tranchage de viande, selon la revendication 1, **caractérisé en ce que** la broche filetée (29) peut être manoeuvrée à l'aide d'une roue à main (20).

3. Dispositif de tranchage de viande, selon la revendication 1, **caractérisé en ce que** le bras pivotant (8) est relié au chevalet (3) à l'aide des vis de serrage (13) qui sont placées dans des recès en forme d'arc de cercle autour de l'axe pivotant (19), les têtes desdits vis se prolongeant jusqu'aux bords du chevalet (3).

4. Dispositif de tranchage de viande, selon la revendication 1, **caractérisé en ce que** sur la table de tranchage (2) un chariot d'alimentation (24) avec une poignée (25) est monté d'une façon coulissante, ledit chariot comportant un positionneur de fente (27), par lequel passe la lame circulaire (6) quand elle est avancée, et au côté duquel sont arrangés au moins un protège-main (26A) et, éventuellement, à l'écart de la poignée (25), un bord d'alimentation (26) pour le matériau à couper (28).

5. Dispositif de tranchage de viande, selon la revendication 4, **caractérisé en ce que** des convoyeurs à rouleaux (43A, 43B) ou des convoyeurs à bande sont montés sur la table de tranchage (2) ou sur le chariot d'alimentation (24), à, un ou deux côtés de la lame circulaire (6).

6. Dispositif de tranchage de viande, selon la revendication 4, **caractérisé en ce que** le chariot d'alimentation (24) est guidé, d'un côté, par une barre de guidage (37), qui est montée latéralement sur le chevalet (3) ; ledit chariot peut être pivoté autour de la barre de guidage (37) sur la table de tranchage (2) et aussi dans une position parallèle au côté de la table de tranchage.

7. Dispositif de tranchage de viande, selon la revendication 4, **caractérisé en ce que** le chariot d'alimentation (24) comporte une auge (47) située sur l'un ou les deux côtés du positionneur de fente (27), qui reçoit le matériau à couper (28), ou **en ce que** une zone près de la cavité est en forme de cuvette, et/ou **en ce que** le largeur du positionneur de fente (27) du chariot d'alimentation (24) est variable, selon le matériau à couper.

8. Dispositif de tranchage de viande, selon la revendication 7, **caractérisé en ce qu'**une barre transversale (46) est montée sur l'avant du chariot d'alimentation (24), d'une façon glissante et pivotante, supportant une coulisse servant de détenteur (23) qui porte une poignée (25A).

9. Dispositif de tranchage de viande, selon la revendication 4, **caractérisé en ce qu'**une barre de guidage horizontale (37) est montée sur la face frontale du chevalet (3), à l'écart du chariot d'alimentation (24), comportant une butée (35, 36) pour le matériau à couper (28), qui est supportée sur la barre d'une façon glissante et fixable, qui est également pivotée et peut être placée sur la table de tranchage (2).

10. Dispositif de tranchage de viande, selon la revendication 1, **caractérisé en ce que** la lame circulaire (6) comporte une bride de support centrale (14) avec une épaisseur radialement décroissante, l'épaisseur de la lame diminuant vers un bord aigu (6A).

11. Dispositif de tranchage de viande, selon la revendication 1, **caractérisé en ce que** la lame circulaire (6) est enfermée par un protège-lame sectoriel (21), qui comporte une bordure du matériel synthétique, placée le long du bord de la lame (6A), profilé concavement et structuré dans des segments (50), qui sont radialement réglables pour s'adapter étroitement aux différents diamètres de la lame circulaire.

12. Dispositif de tranchage de viande, selon la revendication 5, **caractérisé en ce qu'**au moins un des convoyeurs à rouleaux (43A, 43B) est équipé de rouleaux, entraînés passivement ou activement.

13. Dispositif de tranchage de viande, selon la revendication 5, **caractérisé en ce qu'**un convoyeur a rouleaux transversaux (44), est placé dans la zone de travail sur la table de tranchage (2), avec les rouleaux orientés longitudinalement.

14. Dispositif de tranchage de viande, selon la revendication 5, **caractérisé en ce que** les convoyeurs à rouleaux (43A, 43B, 44) sont montés sur le chevalet (3) d'une façon pivotée et détachable.

15. Dispositif de tranchage de viande, selon la revendication 9, **caractérisé en ce que** le chariot d'alimentation (24), la butée (35, 36), le moteur (10) avec l'engrenage (11), et le protège-lame (21) peuvent tous être disposés sur le chevalet (3) préparé soit pour droitier soit pour gaucher.
